# EUROPEAN PATENT SPECIFICATION

(11) **EP 0 749 775 B1**
(45) Date of publication and mention of the grant of the patent: **13.08.2003**
(21) Application number: 96109944.7
(22) Date of filing: 20.06.1996
(51) Int. Cl.: B01D 69/08, B01D 67/00, A61M 1/18

(54) **Method for production of hollow-fiber membrane, hollow-fiber membrane, and dialyzer**
Verfahren zur Herstellung einer Hohlfasermembran, Hohlfasermembran und Dialysator
Procédé de fabrication d'une membrane sous forme de fibre creuse, membrane sous forme de fibre creuse et dialyseur

(30) Priority: 22.06.1995 JP 15565295
(43) Date of publication of application: 27.12.1996
(73) Proprietor: ASAHI MEDICAL Co., Ltd., Tokyo 101-8482 (JP)
(72) Inventor: Sasaki, Masatomi, Ashigarakami-gun, Kanagawa-ken (JP); Endo, Fumiaki, Ashigarakami-gun, Kanagawa-ken (JP); Saruhashi, Makoto, Ashigarakami-gun, Kanagawa-ken (JP)
(74) Representative: Casalonga, Axel

(56) References cited:
- EP-A- 0 103 816
- PATENT ABSTRACTS OF JAPAN vol. 95, no. 007 & JP-A-07 178166 (TERUMO CORP), 18 July 1995, & DATABASE WPI Section Ch, Week 9537 Derwent Publications Ltd., London, GB; Class D22, AN 95-279973
- CHEMICAL ABSTRACTS, vol. 122, no. 10, 6 March 1995 Columbus, Ohio, US; abstract no. 114690, SASAKI, MASATOMI ET AL: "Vitamin E-modified cellulose membrane" XP002013836 & MAKU (1994), 19(6), 400-10 CODEN: MAKUD9;ISSN: 0385-1036, 1994,

## Description

### Field of the Invention:

This invention relates to a method for the production of a hollow-fiber membrane, the hollow-fiber membrane, and a hollow-fiber membrane type dialyzer. More particularly, the invention relates to a method for the production of a hollow-fiber membrane repressing activation of white blood cell or platelets and excelling in biocompatibility, the hollow-fiber membrane, and a hollow-fiber membrane type dialyzer.

### Description of the Prior Art:

Hollow fiber type blood treating devices utilizing varying hollow-fiber membranes have been heretofore applied extensively to the extracorporeal circulation of blood, the dialysis of blood, the oxygenation of blood during the cardiotonomy, or the separation of blood plasma. In recent years, hollow-fiber membranes made of synthetic polymer substances have been finding extensive utility particularly in the field of membranes as a dialysis membranes, gas-exchange membranes, and membranes for separation of blood components.

In the dialysis of blood, for example, since the frequency with which the blood is subjected to extracorporeal circulation is high, such a hollow fiber type blood treating device as mentioned above is destined to be used over a long period of time. The extracorporeal circulation of the blood, therefore, compels the relevant patient to incur such a complication as may well be ascribed to the activation of white blood cell and/or platelets in the blood. This complication has raised a serious problem on the part of the patients who need dialysis of blood.

Among the patients who have been receiving dialysis of blood continually for long periods of time are included those who are found to suffer a decline in the anti-oxidation activity in blood and a rise in the lipid peroxide number. Probably because of these adverse effects of the dialysis, the number of patients of a long history of dialysis who are contracting such diseases as are associated with arteriosclerosis is on the increase.

As a solution for these problems, an artificial internal organ having the surface of the blood dialysis membrane thereof coated with vitamin E which has various physiological activities such as, for example, the in vivo activity to resist oxidation, the in vivo activity to stabilize the membrane, and the activity to repress the coagulation of blood platelets (JP-B-62-41,738, corresponding to EP 0 103 816 A).

The prior art just mentioned, however, needs a complicated and expensive process of production because the work of coating the permeable membrane with vitamin E must be performed after the step of producing the permeable membrane and after the step of assembling the artificial internal organ. Further, since the prior art has the scope thereof limited to the treatment on the surface, it has the problem that the coat cannot fully manifest the effect thereof against a substance which is capable of permeating the membrane.

This invention has been produced for the purpose of solving the problem attendant on the prior art. It is an object of this invention to provide a simple and economic method for the produc-tion of a hollow-fiber membrane, the hollow-fiber membrane, and a hollow-fiber membrane type dialyzer.

Another object of this invention is to provide a method for the production of a hollow-fiber membrane exhibiting fine properties including high biocompatibility and possessing the ability to manifest the effect thereof against substances capable of permeating the membrane, the hollow-fiber membrane, and a hollow-fiber membrane type dialyzer.

### SUMMARY OF THE INVENTION

The objects mentioned above are accomplished by the present invention providing a method for the production of a hollow-fiber membrane, the hollow-fiber membrane, and a hollow-fiber membrane type dialyzer.

Specifically, this invention is directed to a method for the production of a hollow-fiber membrane by a procedure comprising the steps of extruding a spinning dope through an annular spinning orifice and meanwhile filling the extruded linear tube of the spinning dope with a core liquid and then introducing the linear tube into a coagulating bath and thereby solidifying the linear tube, which method is characterized by the fact that a fat soluble vitamin is incorporated in the spinning dope and/or the core liquid before the step of extruding the spinning dope and/or filling said extruded tube with the core liquid and by the fact that a synthetic polymer substance having a solubility parameter δ of not more than 26.65x10³ (J/m³)^{½} (13 (cal/cm³)^{½}) is used as the basis for said membrane.

This invention further concerns a method for the production of the hollow-fiber membrane, wherein the fat-soluble vitamin content of the spinning dope or the core liquid is in the range of 0.001 - 10 wt%.

This invention is directed also to a method for the production of a hollow-fiber membrane by a procedure comprising the steps of extruding a spinning dope through an annular spinning orifice and meanwhile filling the extruded linear tube of the spinning dope with a core liquid and then introducing the linear tube into a coagulating bath and thereby solidifying the linear tube into a filament, which method is characterized by the fact that the filament is continuously immersed into a fat-soluble vitamin solution and thereby impregnated with the solution, and by the fact that a synthetic polymer substance having a solubility parameter δ of not more than 26.65x10³ (J/m³)^{½} (13 (cal/cm³)^{½}) is used as the basis for said membrane.

This invention also concerns the method for the production of the hollow-fiber membrane, wherein the fat-soluble vitamin is vitamin E.

This invention also concerns the method for the production of the hollow-fiber membrane, wherein the vitamin E is α-tocopherol, α-tocopherol acetate, or α-tocopherol nicotinate.

This invention is directed also to a hollow-fiber membrane being obtainable by a procedure comprising the steps of extruding a spinning dope through an annular spinning orifice and meanwhile filling the extruded linear tube of the spinning dope with a core liquid and then introducing the linear tube into a coagulating bath and thereby solidifying the linear tube, which hollow-fiber membrane is characterized by the fact that the spinning dope and/or the core liquid incorporates therein a fat-soluble vitamin, that a synthetic polymer substance having a solubility parameter δ of not more than 26.65x10³ (J/m³)^{½} (13 (cal/cm³)^{½}) is used as the basis for the membranes, and that the amount of fat-soluble vitamin to be incorporated into the membrane is in the range of 1-5000 mg/m².

This invention is also directed to a hollow-fiber membrane comprising micropores formed in a synthetic polymer as a basis for the membrane and a fat-soluble vitamin coating characterized in that said hollow-fiber membrane is impregnated with said fat-soluble vitamin as far as the surface of said micropores in the membrane, that said polymer substance has a solubility parameter δ of not more than 26.65x10³ (J/m³)^{½} (13 (cal/cm³)^{½}), and that the amount of fat-soluble vitamin to be incorporated by impregnation into the membrane is in the range of 1-5000 mg/m².

This invention also concerns the hollow-fiber membrane, wherein the fat-soluble vitamin is vitamin E.

This invention also concerns the hollow-fiber membrane, wherein the vitamin E is α-tocopherol, α-tocopherol acetate, or α-tocopherol nicotinate.

This invention is further directed to a hollow-fiber membrane type dialyzer which is obtained by using the hollow-fiber membrane mentioned above.

### BRIEF DESCRIPTION OF THE DRAWINGS

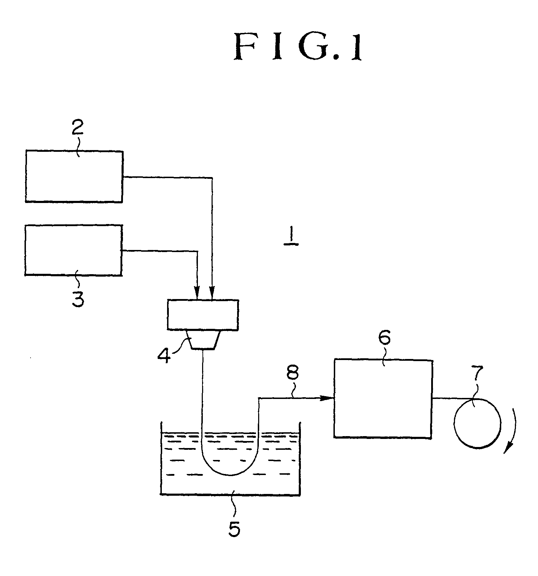

Fig. 1 is a process diagram showing one mode of embodying the method of this invention for producing a hollow-fiber membrane.
Fig. 2 is a partially cutaway perspective view showing one mode of embodying a hollow-fiber membrane type dialyzer of this invention.

### DESCRIPTION OF PREFERRED EMBODIMENT

For use in the production of a hollow-fiber membrane by a procedure comprising the steps of extruding a spinning dope through an annular spinning orifice and meanwhile filling the extruded linear tube of the dope with a core liquid and then introducing the linear tube into a coagulating bath and thereby solidifying the linear tube, the method of this invention is characterized by causing the spinning dope or the core liquid to incorporate therein a fat-soluble vitamin or causing the filaments resulting from the solidification of the linear tube of the dope to be continuously immersed into a fat-soluble vitamin solution. To be specific, by having the hollow-fiber membrane in process of manufacture subjected to a treatment for impregnation with a fat-soluble vitamin during the step of spinning, the hollow-fiber membrane can be impregnated with the fat-soluble vitamin until the vitamin reaches the surface of the micropores in the membrane and, as a result, the hollow-fiber membrane to be produced is enabled to acquire outstanding effects such as manifesting an anti-oxidation activity to substances capable of permeating the membrane.

Various known methods are available for the production of the hollow-fiber membrane by the application of this invention. These known methods include a method which implements the production by causing linear tube of a spinning dope emanating from an annular spinning orifice as meanwhile filled with a core liquid to enter the ambient air and fall down under their own weight and consequently stretch, subjecting the stretched tubes to a treatment for coagulation by the passage through a coagulating bath, and then washing and drying the solidified tubes (hereinafter referred to as "aerial fall method"), a method which comprises directly discharging linear tube of a spinning dope emanating from an annular spinning orifice into a non-coagulating liquid in a bath filled with an upper layer formed of the non-coagulating liquid and a lower layer formed of a coagulating liquid and then passing the linear tube through the coagulating liquid (JP-A-57-71,409), a method which comprises directly discharging linear tube of a spinning dope emanating from an annular spinning orifice into a non-coagulating liquid in a bath filled conversely with an upper layer formed of a coagulating liquid and a lower layer formed of a non-coagulating liquid and then passing the linear tube through the coagulating liquid (JP-A-57-199,808), a method which comprises similarly discharging linear tube of a spinning dope into a non-coagulating liquid and then passing the tubes through the interface between the non-coagulating liquid and a coagulating liquid (JP-A-57-71,408 and -57-71,410), a method which comprises discharging linear tube of a spinning dope round the bulk of a non-coagulating liquid and then passing them in a coagulating liquid (JP-A-57-71,411), and a method which resorts to regeneration may be cited. Since the aerial fall method is particularly appropriate in these methods, the production of the hollow-fiber membrane contemplated by this invention will be described below as attained by the application of this aerial fall method, with reference to the accompanying drawings.

The method of this invention for the production of the hollow-fiber membrane has resulted from improving such conventional methods as are disclosed in U.S. Patent No. 3,615,024, Journal of Applied Polymer Science, Vol. 20, 2377-2394 (1976), and Journal of Applied Polymer Science, Vol. 21, 165-180 (1977), for example. It is carried out by means of a spinning apparatus 1 which comprises a spinning dope tank 2, a core liquid tank 3, a discharge nozzle 4, a coagulating liquid tank 5, a washing liquid tank 6, and a takeup device 7.

The spinning dope tank 2 is filled with a spinning dope obtained by dissolving a basis in a solvent. For the sake of this invention, it is appropriate to use a synthetic polymer substance having a solubility parameter δ of not more than 26.65x10³ (J/m³)^{½} (13 (cal/cm³)^{½}) as the basis. The term "solubility parameter δ" as used in this invention means the index which is set forth, for example, in "KOUBUNSHI DETA Handbook, Basic Volume," pages 591 - 593, compiled by the Society of Polymer Science, Japan and published by Baifukan K.K. on January 30, 1986 (first edition). This index denotes such a mathematical expression that the hydrophilicity gains in degree in direct proportion to the increase in the solubility parameter and the hydrophobicity gains in degree in direct proportion to the decrease in the solubility parameter. Thus, it represents the degree of affinity between the basis of the hollow-fiber membrane and the fat-soluble vitamin. In the method for the production of the hollow-fiber membrane according to this invention, the affinity between these two substances constitutes itself an important requirement for enabling the fat-soluble vitamin solution to permeate the hollow-fiber membrane until it reaches the surface of micropores in the membrane by having the fat-soluble vitamin incorporated in the spinning dope or in the core liquid or by having the linear tube of a spinning dope resulting from coagulation to be continuously immersed in the fat-soluble vitamin solution. Specifically, by using a synthetic polymer substance having a solubility parameter of not more than 26.65x10³ (J/m³)^{½} (13 (cal/cm³)^{½}) as the basis, the basis is made to exhibit ideal affinity for the fat-soluble vitamin, the treatment for impregnating the hollow-fiber membrane with the fat-soluble vitamin is allowed to proceed easily during the step of spinning, and the fat-soluble vitamin is enabled to permeate the hollow-fiber membrane until it reaches the surface of micro-pores in the membrane. As concrete examples of the synthetic polymer substance fulfilling the requirement, polyethylene (δ = 15.78x10³ (7.70)), polymethyl methacrylate (δ = 18.65x10³ (9.10)), polystyrene (δ = 18.75x10³ (9.15)), polypropylene (δ = 19.27x10³ (9.40)), polysulfone (δ = 20.29x10³ (9.90)), polyhydroxyethyl methacrylate (δ = 20.5x10³ (10.00)), nylon 66 (δ = 22.92x10³ (11.18)), cellulose diacetate (δ = 23.27x10³ (11.35)), polyacrylonitrile (δ = 25.32x10³ (12.35)), polyvinyl alcohol (δ = 25.83x10³ (12.60)), cellulose triacetate, ethylene-vinyl alcohol copolymer, and polycarbonates may be cited. These polymer substances may be used either singly or in the form of a mixture of two or more members.

As concrete examples of the solvent for the spinning dope mentioned above, dimethyl acetamide (DMA), dimethyl sulfoxide (DMSO), and dimethyl formamide (DMF) may be cited. The solvent is so selected as to suit the kind of a basis to be actually used. The spinning dope mentioned above, when necessary, may incorporate therein such additives as a thickener and an agent for imparting a hydrophilic property. As concrete examples of the thickener, polyvinyl pyrrolidone (PVP), polyethylene glycol (PEG), and polypropylene glycol (PPG) may be cited. As concrete examples of the agent for imparting hydrophilicity, glycerin, may be cited.

The core liquid tank 3 is filled with a core liquid which is intended to give a shape to a hollow core. As the core liquid, a nonsolvent for the basis or a mixed solution consisting of the nonsolvent and a solvent is used. Water, methanol, and the like said membrane. are available for the nonsolvent. The solvents cited above are available for the mixed solution. The nonsolvent and/or the solvent is selected so as to suit the kind of a basis to be used.

In the method of this invention for the production of a hollow-fiber membrane, the fat-soluble vitamin is incorporated in either or both of the spinning dope and the core liquid. As concrete examples of the fat-soluble vitamin, vitamin A, vitamin D, vitamin E, vitamin K, and ubiquinone may be cited. Among other vitamins mentioned above, vitamin E proves advantageous. As concrete examples of the vitamin E, α-tocopherol, α-tocopherol acetate, α-tocopherol nicotinate, β-tocopherol, and δ-tocopherol may be cited. Appropriately, the fat-soluble vitamin content of the spinning dope or the core liquid is in the range of 0.001 - 10 wt%, preferably 0.01 - 5 wt%. If the fat-soluble vitamin content is less than 0.01 wt%, the effect of the addition of the fat-soluble vitamin will not be obtained. If the content exceeds 10 wt%, the excess will produce no proportionate addition to the effect and will prove uneconomical.

Then, the spinning dope emitted from the spinning dope tank 2 is discharged through an annular spinning orifice (not shown) which is an outer tube of the discharge nozzle 4 of a double-wall construction and the core liquid emitted from the core liquid tank 3 is simultaneously discharged through an inner tube (not shown) of the discharge nozzle 4 and the linear tube of the spinning dope emanating from the spinning orifice is extruded into the ambient air while the core part of the linear tube is meanwhile filled with the core liquid. The extruded linear tube is allowed to stretch as it falls down per se under its own weight and the stretched linear tube is introduced into the coagulating liquid tank 5 to be solidified therein. As the coagulating liquid for use in the coagulating liquid tank, the aforementioned nonsolvent for the basis is used. This liquid, when necessary, may incorporate the aforementioned solvent for the basis, a surfactant, and the like in a small proportion therein. A filament 8 which emanates from the coagulating bath is passed through the washing liquid tank 6 and wound up on the takeup device 7. Generally, water is used as the washing liquid in the washing liquid tank.

In the method of this invention for the production of the hollow-fiber membrane, the incorporation of the fat-soluble vitamin into the membrane may be implemented by causing the filament 8 resulting from the coagulation to be continuously immersed into a fat-soluble vitamin solution instead of having the fat-soluble vitamin incorporated in the spinning dope or in the core liquid. In this case, a fat-soluble vitamin solution tank is interposed between the coagulating liquid tank 5 and the washing liquid tank 6 or between the washing liquid tank 6 and the takeup device 7 so that the filament 8 emanating from the coagulating liquid tank 5 or the washing liquid tank 6 may be subsequently introduced into the fat-soluble vitamin solution tank to be given therein a treatment for impregnation with the vitamin solution.

The solvent to be used advantageously in this case for the fat-soluble vitamin solution dissolves the fat-soluble vitamin, avoids dissolving the basis for the membrane, and possesses a solubility parameter of not more than 30.75x10³ (J/m³)^{½} (15 (cal/cm³)^{½}). If the solubility parameter exceeds 15, the elution from the membrane of additives like the agent for imparting hydrophilicity such as, for example, glycerin [δ = 33.82x10³ (J/m³)^{½} (16.5 (cal/cm³)^{½})] will proceed possibly to the extent of exerting adverse effects on the performance of the membrane and the characteristics of the membrane. As concrete examples of the solvent which answers the description, alcohols such as methanol, ethanol, n-propanol, isopropanol, n-butanol, isobutanol, sec-butanol, and 2-ethylhexanol; ethers such as diethyl ether; hydrocarbon chlorofluorides such as 1,2,2-trichloro-1,2,2-trifluoroethane, trichlorofluoromethane, and 1,1,2,2-tetrachloro-1,2-difluoroethane; perfluorocycloalkanes such as perfluoromethylpropyl cyclohexane, and perfluorobutyl cyclohexane; hydrocarbon fluorides methyl fluoride, carbon tetrafluoride, tetrafluoroethane, tetrafluoroethylene, such as perfluorodecane, perfluoromethyl decane, and perfluoroalkyl tetrahydropyrans; and hydrocarbons such as hexane, heptane, and decane may be cited. The solvent is selected so as to suit the kind of a basis to be used. With due consideration for possible residues in the hollow-fiber membrane, hexane is advantageously used as the solvent where polysulfone is used as the basis and vitamin E as the fat-soluble vitamin.

Though the concentration of the fat-soluble vitamin solution is variable with the kind of a basis to be used and the duration of time of immersion, it is appropriately in the range of 0.01 - 20 w/v%, preferably 0.01 - 10 w/v%. If the concentration of the fat-soluble vitamin solution is less than 0.01 w/v%, the effect of the addition of the fat-soluble vitamin will not be obtained. If the concentration exceeds 20 w/v%, the excess will produce no proportionate addition to the effect and will prove uneconomical.

The hollow-fiber membrane of this invention which is obtained as described above has an inside diameter in the range of 10 - 1000 µm, preferably 100 - 300 µm, and a wall thickness in the range of 5 - 100 µm, preferably 20 - 60 µm, and is impregnated with the fat-soluble vitamin as far as the surface of micropores in the membrane. In order for this invention to fulfill the prominent effects thereof such as enabling the fat-soluble vitamin to retain for a long time the activity thereof to repress the possible coagulation of blood platelets, the amount of the fat-soluble vitamin to be incorporated by impregnation into the hollow-fiber membrane of this invention is appropriately in the range of 1 ∼ 5000 mg/m², preferably 10 - 1000 mg/m².

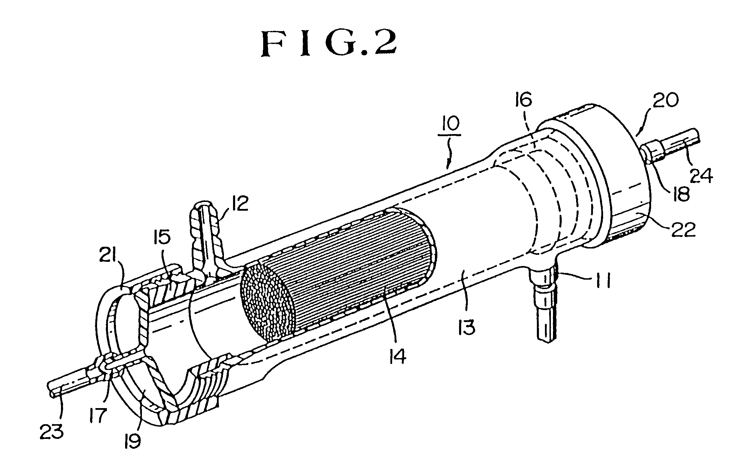

Now, the hollow-fiber membrane type dialyzer contemplated by this invention will be described below. A hollow-fiber membrane type dialyzer 10, as shown in Fig. 2, is obtained by inserting a hollow-fiber membrane bundle 14 formed of a multi-plicity of hollow-fiber membranes of this invention into a cylinder 13 provided near the opposite end parts thereof with a dialytic solution inlet tube 11 and a dialytic solution outlet tube 12 and then sealing the opposite end parts of the cylinder 13 proper respectively with potting agents 15 and 16. This dialyzer structurally resembles a shell-and-tube type device such as in a heat exchanger. Headers 19 and 20 provided respectively with a bodily humor inlet mouth 17 and a bodily humor outlet mouth 18 are applied fast to the opposite ends of the cylinder 13 proper and the headers 19 and 20 are fixed to the cylinder 13 respectively with caps 21 and 22. Then, tubes 23 and 24 intended for connection to a human body are respectively connected to the bodily humor inlet mouth 17 and a bodily humor outlet mouth 18. As concrete examples of the material for the cylinder proper, the headers, and the caps mentioned above, polycarbonate and polypropylene may be cited. Polyurethane may be cited as a typical example of the potting agent.

Now, this invention will be described more specifically below with reference to working examples. It should be noted, however, that this invention is not limited to these examples.

### Example 1

### 1. Preparation of spinning dope and core liquid

A spinning dope was prepared by mixing 15 wt% of polysulfone [solubility parameter δ 20.29x10³ (J/m³)^{½} (9.90 (cal/cm³)^{½})], 9 wt% of PVP, 45 wt% of DMSO, 35 wt% of DMA, and 1 wt% of water. A core liquid was prepared by forming a composition consisting of 30 wt% of DMSO, 30 wt% of DMA, 30 wt% of methanol, and 10 wt% of water and mixing this composition with 1 wt% of α-tocopherol.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried to produce a hollow-fiber membrane. The hollow-fiber membrane thus obtained was found to have an inside diameter of about 200 µm and an outside diameter of about 280 µm and an α-tocopherol content of about 480 mg/m².

### 3. Production of hollow-fiber type dialyzer

The hollow-fiber membrane obtained in 2. above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Example 2

### 1. Preparation of spinning dope

A spinning dope was prepared by forming a dope composed of 15 wt% of polysulfone, 9 wt% of PVP, 46 wt% of DMSO, and 30 wt% of DMA and mixing the dope with 0.5 wt% of α-tocopherol. This solution had a viscosity of 36 poises. A core liquid was prepared by mixing 30 wt% of DMSO, 30 wt% of DMA, and 40 wt% of water.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried to produce a hollow-fiber membrane. The hollow-fiber membrane thus obtained was found to have an inside diameter of about 200 µm and an outside diameter of about 280 µm and an α-tocopherol content of about 580 mg/m².

### 3. Production of hollow-fiber type dialyzer

The hollow-fiber membrane obtained in 2. above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Example 3

### 1. Preparation of spinning dope

A spinning dope was prepared by mixing 15 wt% of polysulfone, 9 wt% of PVP, 45 wt% of DMSO, 35 wt% of DMA, and 1 wt% of water. A core liquid was prepared by mixing 30 wt% of DMSO, 30 wt% of DMA, and 40 wt% of water.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried. It was then passed through an α-tocopherol 10%/hexane solution tank and dried to produce a hollow-fiber membrane. The hollow-fiber membrane thus obtained was found to have an inside diameter of about 200 µm and an outside diameter of about 280 µm and an α-tocopherol content of about 830 mg/m².

### 3. Production of hollow-fiber type dialyzer

The hollow-fiber membrane obtained in 2. above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Example 4

### 1. Preparation of spinning dope

A spinning dope was prepared by mixing 15 wt% of polysul-fone, 9 wt% of PVP, 45 wt% of DMSO, 35 wt% of DMA, and 1 wt% of water. A core liquid was prepared by mixing 30 wt% of DMSO, 30 wt% of DMA, and 40 wt% of water.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried. It was then passed through an α-tocopherol acetate 10%/hexane solution tank and dried to produce a hollow-fiber membrane. The hollow-fiber membrane thus obtained was found to have an inside diameter of about 200 µm and an outside diameter of about 280 µm and an α-tocopherol acetate content of about 780 mg/m².

### 3. Production of hollow-fiber type dialyzer

The hollow-fiber membrane obtained in 2 . above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Example 5

### 1. Preparation of spinning dope

A spinning dope was prepared by mixing 15 wt% of polysul fone, 9 wt% of PVP, 45 wt% of DMSO, 35 wt% of DMA, and 1 wt% of water. A core liquid was prepared by mixing 30 wt% of DMSO, 30 wt% of DMA, and 40 wt% of water.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried. It was then passed through an α-tocopherol nicotinate 10%/hexane solution tank and dried to produce a hollow-fiber membrane. The hollow-fiber membrane thus obtained was found to have an inside diameter of about 200 µm and an outside diameter of about 280 µm and an α-tocopherol nicotinate content of about 740 mg/m².

### 3. Production of hollow-fiber type dialyzer

The hollow-fiber membrane obtained in 2. above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Example 6

### 1. Preparation of spinning dope

A spinning dope was prepared by forming a polyacrylonitrile type copolymer [solubility parameter δ 25.32x10³ (J/m³)^{½} (12.35 (cal/cm³)^{½})] composed of 91.5 wt% of acrylonitrile, 8 wt% of methyl acrylate, and 0.5 wt% of sodium methallyl sulfonate and mixing 12.4 wt% of this copolymer with 82.8 wt% of DMF and 4.8 wt% of zinc chloride.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried. It was then passed through an α-tocopherol 10%/hexane solution tank and dried to produce a hollow-fiber membrane. The hollow-fiber membrane thus obtained was found to have an inside diameter of about 200 µm and an outside diameter of about 300 µm and an α-tocopherol nicotinate content of about 50 mg/m².

### Control 1

### 1. Preparation of spinning dope

A spinning dope was prepared by mixing 15 wt% of polysulfone, 9 wt% of PVP, 45 wt% of DMSO, 35 wt% of DMA, and 1 wt% of water. A core liquid was prepared by mixing 30 wt% of DMSO, 30 wt% of DMA, and 40 wt% of water.

### 2. Production of hollow-fiber membrane

The spinning dope and the core liquid prepared in 1. above were simultaneously discharged respectively through the outer tube (annular spinning orifice) and the inner tube of the double-wall tubular discharge nozzle to extrude a linear tube of the spinning dope into the ambient air while filling the core part of the linear tube with the core liquid. The linear tube filled with the core liquid was passed through a coagulating liquid tank filled with water and thereby solidified therein and then washed and dried to produce a hollow-fiber membrane. The hollow-fiber membrane thus obtained was found to have an inside diameter of about 200 µm and an outside diameter of about 280 µm.

### 3. Production of hollow-fiber type dialyzer

The hollow-fiber membrane obtained in 2. above was laterally cut into pieces, about 14 cm in length. A bundle of 341 pieces was inserted into a cylinder of polycarbonate, 1.2 cm in inside diameter and 14 cm in length. The opposite ends of the bundle were fixed each with a potting agent of polyurethane. Headers made of polycarbonate were attached one each to the opposite ends and were fixed each with a cap made of polycarbonate to complete a hollow-fiber type dialyzer in such a structure as shown in Fig. 2. The hollow-fiber type dialyzer thus obtained was found to have an inner surface area of 300 cm².

### Test Example 1: Determination of lipid peroxide

The hollow-fiber type dialyzers of Examples 1 - 5 and Control 1 were used in the determination of lipid peroxide by the following procedure.

A given hollow-fiber type dialyzer was primed with 10 ml of physiological saline solution and then caused to aspirate gently 4 ml of blood (adding 10 U of heparin) for thorough displacement of the physiological saline solution in the minimodule with the blood. The blood was incubated at 37°C for two hours and then recovered from the minimodule. The recovered blood was subjected to the determination by the Yagi method with a lipid peroxide test WAKO (produced by Wako Pure Chemical Industries Ltd). In this case Malondialdehyde (MDA) was determined as an indicator substance of lipid peroxide. The results are shown in Table 1.

**Table 1**

| | Test Data MDA (nmol/ml) | | | Average MDA (nmol/ml) |
|---|---|---|---|---|
| Example 1 | 1.60 | 1.48 | 1.71 | 1.60 ± 0.12 |
| Example 2 | 1.62 | 1.70 | 1.49 | 1.60 ± 0.11 |
| Example 3 | 1.59 | 1.61 | 1.69 | 1.63 ± 0.05 |
| Example 4 | 1.47 | 1.73 | 1.52 | 1.64 ± 0.12 |
| Example 5 | 1.55 | 1.69 | 1.62 | 1.62 ± 0.06 |
| Control 1 | 1.90 | 1.84 | 1.75 | 1.83 ± 0.08 |

It is clearly noted from Table 1 given above that, while the polysulfone membrane of Control 1 yielded lipid peroxide in a large amount, the membranes of Examples 1 - 5 according to this invention yielded the lipid peroxide only in minute amounts and were recognized to provide effective repression of active oxygen and to manifest improved biocompatibility.

### Test Example 2: Determination of amount of eluted vitamin E

The hollow-fiber type dialyzers of Examples 1 - 5 and Control 1 were used in the determination of the elution of vitamin E by the following procedure.

First, 500 ml of bovine blood was dispensed in 50-ml test tubes made of polypropylene and centrifuged at 3000 rpm for 15 minutes to obtain 200 ml of bovine blood plasma. Then, 50 ml of the bovine blood plasma was placed in a 50-ml test tube made of polypropylene. The test tube containing the bovine blood plasma was connected via a pump with the tube 14 made of vinyl chloride to the blood inlet mouth 8 of the hollow-fiber type dialyzer 1 and the test tube containing the bovine blood plasma was also connected with the tube 15 made of vinyl chloride to the blood outlet mouth 9 of the hollow-fiber type dialyzer 1 to prepare a test circuit.

The test tube containing the bovine blood plasma was kept in a constant temperature bath at 37°C and the bovine blood plasma was circulated by a pump at a flow volume of 10 ml/min through the interior of the hollow-fiber type dialyzer for four hours. After the four hours' circulation, the bovine blood plasma was analyzed to determine the amount of vitamin E eluted meanwhile from the membrane into the blood plasma.

The amount of vitamin E dissolved into the blood plasma was determined as follows. First, 1 ml of the bovine blood plasma which had undergone the circulation was taken as a sample. The sample and 1 ml of ethanol added thereto were mixed for 30 seconds to remove proteins from the plasma. Then, the resultant mixture and 5 ml of hexane added thereto were mixed for one minute to effect migration of the vitamin E in the bovine blood plasma into the hexane layer. The mixture consequently formed was centrifuged at 1500 rpm for ten minutes. The upper hexane layer consequently separated was analyzed by liquid chromatography to determine the amount of vitamin E.

The determination by the liquid chromatography was performed using Amide-80, 4.6 × 25 cm (Toso TSK gel), as a column; n-hexane : i-propanol = 98 : 2 as a moving bed; 1.5 ml/min as a flow rate; 10 µl as an injection volume; and UV monitor 292 nm as a detection wavelength.

The results of the determination of the amount of vitamin E dissolved into the blood plasma in Test Example 1 are shown in Table 2.

**Table 2**

| | Before circulation µg/ml | After circulation µg/ml |
|---|---|---|
| Example 1 | 2.1 | 1.9 |
| Example 2 | 2.1 | 2.3 |
| Example 3 | 2.1 | 2.1 |
| Example 4 | 2.1 | 2.0 |
| Example 5 | 2.1 | 2.1 |
| Control 1 | 2.1 | 2.2 |

It is clearly noted from Table 2 given above that the amount of vitamin E in the blood plasmas after the circulation was practically equal in the sample of Control 1 which had not undergone the treatment with vitamin E and the samples of Examples 1-5 according to this invention. This fact indicates that no elution occurred in any of the samples used in the test.

### Test Example 3: Evaluation of biocompatibility

The hollow-fiber type dialyzers of Example 3 and Control 1 were each used in the evaluation of biocompatibility of vitamin E by the extracorporeal blood circulation of rabbit. The hollow fibers in the dialyzer, after the extracorporeal circulation, were examined to determine the number of hollow fibers which were still containing residual blood.

First, a rabbit was fixed with the back on the underside to a Kitajima type fixing bed. The rabbit had the hair cut with an electric clipper in the area destined to be surgically operated and had the cut area cleaned by wiping with a wad of cotton impregnated with ethyl alcohol. Then, the throat of the rabbit was incised with a pair of scissors along the median line from below the jaw through the collarbone and the part of the fascia consequently exposed was cut open to peel the right (left) common carotid artery attentively so as to avoid inflicting damage on the nerve, the ramified blood vessels, and the neighboring tissue. Subsequently, the left (right) anterior facial vein was similarly peeled attentively. Then, with the blood vessels held in a clamped state, an indwelling syringe which was filled with physiological saline solution and provided with a rubber cap for an injection was plunged into the vein and fixed by tying. It was further connected to the vein side of the hollow-fiber type dialyzer having the vein side circuit thereof filled with physiological saline solution through the medium of a tube made of vinyl chloride and filled with physiological saline solution. In the same manner as above, the indwelling syringe was plunged into the artery mentioned above, fixed by tying, and then connected to the artery side of the hollow-fiber type dialyzer via a pump through the medium of a tube made of vinyl chloride and filled with physiological saline solution.

By using the extracorporeal blood circulation circuit for the rabbit established as described above, the test of extracorporeal circulation was carried out as follows. First, with the clamp removed from the blood vessels, the rabbit blood was extracorporeally circulated at a fixed flow volume of 10 ml/min by the pump for two hours. After the completion of this extracorporeal circulation, the blood vessels of the vein and the artery were clamped again and the artery side circuit and the vein side circuit were cut in the portions thereof close to the indwelling syringe. Then, 50 ml of physiological saline solution was passed once at a flow volume of 10 ml/min with the pump to purge the circuits and the interior of the hollow-fiber type dialyzer. After the purging, the hollow fibers of the dialyzer were cut in the central part of the dialyzer. The cut hollow fibers were microscopically examined to take count of the hollow fibers still containing residual blood. The residual blood ratio was calculated from the total number of hollow fibers in the dialyzer and the number of the hollow fibers containing residual blood.

The results of the calculation of the residual blood ratio performed after the completion of the extracorporeal circulation in Test Example 3 are shown in Table 3.

**Table 3**

| | Data | | | Average |
|---|---|---|---|---|
| Example 1 | 7.8 | 22.0 | 15.0 | 14.9 ± 7.1 |
| Example 2 | 18.5 | 10.7 | 21.5 | 16.9 ± 4.6 |
| Example 3 | 23.7 | 18.9 | 12.1 | 18.2 ± 4.6 |
| Example 4 | 19.7 | 10.1 | 13.5 | 14.4 ± 4.0 |
| Example 5 | 23.5 | 15.7 | 18.1 | 19.1 ± 3.3 |
| Control 1 | 35.2 | 24.4 | 27.7 | 29.9 ± 5.5 |
| Residual blood ratio (%) | | | | |

It is clearly noted from Table 3 given above that, while the polysulfone membrane of Control 1 which had not been treated with vitamin E showed a residual blood ratio of 29.9%, the vitamin E-immobilized polysulfone membrane of Example 1 according to this invention showed a residual blood ratio of 14.9%. This fact clearly indicates that owing to the activity of vitamin E to repress the possible coagulation of blood platelets, the residual blood ratio was decreased after the extracorporeal circulation of rabbit blood and the membrane exhibited perfect biocompatibility.

As described in detail above, the method of this invention for the production of a hollow-fiber membrane enables a fat-soluble vitamin to permeate the hollow-fiber membrane as far as the surface of micropores in the membrane by either causing the fat-soluble vitamin to be incorporated in the spinning dope or the core liquid or first causing the filament formed after the coagulation to be continuously immersed in a fat-soluble vitamin solution and subsequently, at the step of the formation of the membrane, subjecting the hollow-fiber membrane to a treatment for the impregnation with the fat-soluble vitamin. As compared with the conventional method which, after a blood dialysis membrane has been manufactured and incorporated in an assembled artificial organ, provides a coating of vitamin E exclusively for the surface of the permeable membrane which is destined to contact blood, the method of this invention permits production of a hollow-fiber membrane and a hollow-fiber membrane type dialyzer which enable the fat-soluble vitamin to manifest the effect of repressing oxidation on substances capable of permeating the hollow-fiber membrane. Particularly, the hollow-fiber membrane and the hollow-fiber membrane type dialyzer according to this invention excel the conventional countertypes in biocompatibility, allay the residual blood ratio, repress the occurrence of active oxygen, and alleviate various diseases ascribable to active oxygen.

Further, owing to the use of a synthetic polymer substance having a solubility parameter δ of not more than 26.65x10³ (J/m³)^{½} (13 (cal/cm³)^{½}) as the basis for the membrane, this invention can exalt the affinity between the basis of the hollow-fiber membrane and the fat-soluble vitamin and render the aforementioned effect more prominent.

Since this invention performs the treatment for the impregnation with the fat-soluble vitamin on the hollow-fiber membrane which is in process of formation, it permits the membrane to be produced by a simple process at a lower cost as compared with the conventional method which performs the treatment after the step of the formation of the membrane and after the assembly of the artificial internal organ.

## Claims

1. A method for the production of a hollow-fiber membrane by a procedure comprising the steps of extruding a spinning dope (2) through an annular spinning orifice (4) and meanwhile filling the extruded linear tube of said spinning dope with a core liquid (3) and then introducing said linear tube into a coagulating bath (5) and thereby solidifying said linear tube, which method is **characterized by** the fact that a fat soluble vitamin is incorporated in said spinning dope and/or said core liquid before the step of extruding the spinning dope and/or filling said extruded tube with the core liquid and by the fact that a synthetic polymer substance having a solubility parameter δ of not more than 26.65x10³(J/m³)^{½} (13 (cal/cm³)^{½}) is used as the basis for said membrane.

2. A method according to claim 1, wherein the content of said fat-soluble vitamin in said spinning dope or said core liquid is in the range of 0.001 - 10 wt%.

3. A method for the production of a hollow-fiber membrane by a procedure comprising the steps of extruding a spinning dope (2) through an annular spinning orifice (4) and meanwhile filling the extruded linear tube of said spinning dope with a core liquid (3) and then introducing said linear tube into a coagulating bath (5) and thereby solidifying said linear tube into a filament, which method is **characterized by** the fact that the filament is continuously immersed into a fat-soluble vitamin solution and thereby impregnated with said solution, and by the fact that a synthetic polymer substance having a solubility parameter δ of not more than 26.65x10³ (J/m³)^{½} (13 (cal/cm³)^{½}) is used as the basis for said membrane.

4. A method according to any of claims 1 - 3, wherein said fat-soluble vitamin is vitamin E.

5. A method according to claim 4, wherein said vitamin E is an α-tocopherol, an α-tocopherol acetate, or an α-tocopherol nicotinate.

6. A hollow fiber membrane being obtainable by a procedure comprising the step of extruding a spinning dope through an annular spinning orifice and meanwhile filling the extruded linear tube of said spinning dope with a core liquid and then introducing said linear tube into a coagulating bath and thereby solidifying said linear tube **characterized by** the fact that said spinning dope and/or said core liquid incorporates therein a fat-soluble vitamin, that a synthetic polymer substance having a solubility parameter δ of not more than 26.65x10³ (J/m³)^{½} (13 (cal/cm³)^{½}) is used as the basis for said membrane, and that the amount of fat-soluble vitamin to be incorporated by impregnation into the membrane is in the range of 1-5000 mg/m².

7. A hollow-fiber membrane comprising micropores formed in a synthetic polymer as a basis of the membrane and a fat-soluble vitamin coating **characterized in that** said hollow fiber membrane is impregnated with said fat-soluble vitamin as far as the surface of said micropores in the membrane, that said polymer substance has a solubility parameter δ of not more than 26.65x10³ (J/m³)^{½} (13 (cal/cm³)^{½}), and that the amount of fat-soluble vitamin to be incorporated by impregnation into the membrane is in the range of 1-5000 mg/m².

8. A hollow-fiber membrane according to claim 6 or 7, wherein said fat-soluble vitamin is vitamin E.

9. A hollow-fiber membrane according to claim 8, wherein said vitamin E is an α-tocopherol, an α-tocopherol acetate, or an α-tocopherol nicotinate.

10. A hollow-fiber membrane type dialyzer obtained by using a hollow-fiber membrane set forth in any of claims 6 - 9.

## Patentansprüche

1. Verfahren zur Herstellung einer Hohlfasermembran nach einer Arbeitsweise, umfassend die Stufen des Extrudierens einer Spinnflüssigkeit (2) durch eine Kreisring-Spinnöffnung (4) und währenddessen Füllen des extrudierten linearen Schlauches dieser Spinnflüssigkeit mit einer Kernflüssigkeit (3) und dann Einführen dieses linearen Schlauches in ein Koagulierbad (5) und dadurch Verfestigen dieses linearen Schlauches, wobei das Verfahren durch die Tatsache gekennzeichnet ist, daß ein fettlösliches Vitamin in diese Spinnflüssigkeit und/oder in diese Kernflüssigkeit vor der Stufe des Extrudierens der Spinnflüssigkeit und/oder des Füllens dieses extrudierten Schlauches mit der Kernflüssigkeit eingegeben wird, und durch die Tatsache, daß eine synthetische polymere Substanz, die einen Löslichkeitsparameter δ von nicht mehr als 26,65 x 10³ (J/m³)^{1/2} (13 (cal/cm³)^{1/2}) besitzt, als Basis für diese Membran verwendet wird.

2. Verfahren nach Anspruch 1, bei welchem der Gehalt von diesem fettlöslichen Vitamin in dieser Spinnflüssigkeit oder dieser Kernflüssigkeit in dem Bereich von 0,001 - 10 Gew.-% liegt.

3. Verfahren zur Herstellung einer Hohlfasermembran nach einer Arbeitsweise, umfassend die Stufen des Extrudierens einer Spinnflüssigkeit (2) durch eine Kreisring-Spinnöffnung (4) und währenddessen Füllen des extrudierten linearen Schlauches dieser Spinnflüssigkeit mit einer Kernflüssigkeit (3) und dann Einführen dieses linearen Schlauches in eine Koagulierbad (5) und dadurch Verfestigen dieses linearen Schlauches zu einem Einzelfaden, wobei das Verfahren durch die Tatsache gekennzeichnet ist, daß der Einzelfaden kontinuierlich in eine Lösung eines fettlöslichen Vitamins eingetaucht und hierdurch mit dieser Lösung imprägniert wird, und durch die Tatsache, daß eine synthetische polymere Substanz, die einen Löslichkeitsparameter δ von nicht mehr als 26,65 x 10³ (J/m³)^{1/2} (13 (cal/cm³)^{1/2}) besitzt, als Basis für diese Membran verwendet wird.

4. Verfahren nach einem der Ansprüche 1 - 3, bei welchem dieses fettlösliche Vitamin Vitamin E ist.

5. Verfahren nach Anspruch 4, bei welchem dieses Vitamin E ein α-Tocopherol, ein α-Tocopherolacetat oder ein α-Tocopherolnicotinat ist.

6. Hohlfasermembran, erhältlich nach einer Arbeitsweise, umfassend die Stufe des Extrudierens einer Spinnflüssigkeit durch eine Kreisring-Spinnöffnung und währenddessen Füllen des extrudierten linearen Schlauches dieser Spinnflüssigkeit mit einer Kernflüssigkeit und dann Einführen dieses linearen Schlauches in ein Koagulierbad und hierdurch Verfestigen dieses linearen Schlauches, **gekennzeichnet durch** die Tatsache, daß diese Spinnflüssigkeit und/oder diese Kernflüssigkeit hierin ein fettlösliches Vitamin einschließen, daß eine synthetische polymere Substanz, die einen Löslichkeitsparameter δ von nicht mehr als 26,65 x 10³ (J/m³)^{1/2} (13 (cal/cm³)^{1/2}) besitzt, als Basis für diese Membran verwendet wird, und daß die Menge dieses fettlöslichen Vitamins, die **durch** Imprägnierung in die Membran eingebaut werden soll, in dem Bereich von 1 - 5000 mg/m² liegt.

7. Hohlfasermembran, umfassend in einem synthetischen Polymeren als Basis für die Membran gebildete Mikroporen und einen Überzug aus fettlöslichem Vitamin, **dadurch gekennzeichnet, daß** diese Hohlfasermembran mit diesem fettlöslichen Vitamin so weit wie die Oberfläche dieser Mikroporen in dieser Membran imprägniert ist, daß diese polymere Substanz einen Löslichkeitsparameter δ von nicht mehr als 26,65 x 10³ (J/m³)^{1/2} (13 (cal/cm³)^{1/2}) besitzt, und daß die Menge dieses fettlöslichen Vitamins, die durch Imprägnierung in die Membran eingebaut werden soll, in dem Bereich von 1 - 5000 mg/m² liegt.

8. Hohlfasermembran nach Anspruch 6 oder 7, bei welcher dieses fettlösliche Vitamin Vitamin E ist.

9. Hohlfasermembran nach Anspruch 8, bei welcher dieses Vitamin E ein α-Tocopherol, ein α-Tocopherolacetat oder ein α-Toco-pherolnicotinat ist.

10. Dialysator vom Hohlfasermembrantyp, erhalten durch Verwendung einer Hohlfasermembran wie in einem der Ansprüche 6 bis 9 angegeben.

## Revendications

1. Procédé pour la production d'une membrane à fibres creuses par une procédure comprenant les étapes d'extrusion d'une solution à filer (2) à travers un orifice de filage annulaire (4) et, pendant ce temps, de remplissage du tube linéaire extrudé de solution à filer avec un liquide de noyau (3) puis d'introduction dudit tube linéaire dans un bain de coagulation (5) et de solidification du tube linéaire, **caractérisé en ce que** l'on introduit une vitamine liposoluble dans la solution à filer et/ou dans le liquide de noyau avant l'étape d'extrusion de la solution à filer et/ou le remplissage dudit tube avec le liquide de noyau, et **en ce que** l'on utilise une substance polymère synthétique ayant un paramètre de solubilité δ n'excédant pas 26, 65.10³ (J/m³)^{1/2}(13 cal/cm³)^{1/2}, en tant que base pour ladite membrane.

2. Procédé selon la revendication 1, dans lequel la teneur de vitamines liposolubles dans la solution à filer ou dans le liquide de noyau se situe dans la plage comprise entre 0,01 à 10 % en poids.

3. Procédé de production d'une membrane à fibres creuses par une procédure comprenant les étapes d'extrusion d'une solution à filer (2) à travers un orifice de filage annulaire (4) et, pendant ce temps, de remplissage du tube linéaire extrudé de solution à filer avec un liquide de noyau (3), puis d'introduction dudit tube linéaire dans un bain de coagulation (5) et de solidification dudit tube linéaire sous la forme d'un filament, **caractérisé en ce que** le filament est immergé de manière continue dans une solution de vitamine liposoluble puis est imprégné par ladite solution et **en ce que** l'on utilise une substance polymère synthétique ayant un paramètre de solubilité δ n'excédant pas 26, 65.10³ (J/m³)^{1/2} (13 cal/cm³)^{1/2} en tant que base pour ladite membrane.

4. Procédé selon l'une quelconque des revendications 1 à 3, dans lequel ladite vitamine liposoluble est une vitamine E.

5. Procédé selon la revendication 4, dans lequel ladite vitamine E est de l'α-tocophérol, un acétate d'α-tocophérol ou un nicotinate d'α-tocophérol.

6. Membrane à fibres creuses susceptible d'être obtenue par une procédure comprenant les étapes d'extrusion d'une solution à filer à travers un orifice de filage annulaire et, pendant ce temps, de remplissage du tube linéaire de solution à filer extrudé avec un liquide de noyau, puis d'introduction dudit tube linéaire dans un bain de coagulation et de solidification dudit tube linéaire, **caractérisée en ce que** ladite solution à filer et/ou ledit liquide de noyau incorpore une vitamine liposoluble, **en ce que** l'on utilise une substance polymère synthétique ayant un paramètre de solubilité δ n'excédant pas 26, 65.10³ (J/m³)^{1/2} (13 cal/cm³)^{1/2} en tant que base pour ladite membrane, et **en ce que** la quantité de vitamine liposoluble à incorporer par imprégnation dans la membrane se situe dans la plage allant de 1 à 5000 mg/m².

7. Membrane à fibres creuses comprenant des micropores formés dans un polymère synthétique en tant que base pour la membrane et un revêtement de vitamine liposoluble, **caractérisée en ce que** la membrane à fibres creuses est imprégnée avec ladite vitamine liposoluble jusqu'à la surface desdits micropores dans la membrane, **en ce que** ladite substance de polymère a un paramètre de solubilité δ n'excédant pas 26, 65.10³ (J/m³)^{1/2} (13 cal/cm³)^{1/2}, et **en ce que** la quantité de vitamine liposoluble à incorporer par imprégnation dans la membrane se situe dans la plage allant de 1 à 5000 mg/m².

8. Membrane à fibres creuses selon l'une des revendications 6 et 7, dans laquelle ladite vitamine liposoluble est de la vitamine E.

9. Membrane à fibres creuses selon la revendication 8, dans laquelle ladite vitamine E est un α-tocophérol, un acétate d'α-tocophérol ou un nicotinate d'α-tocophérol.

10. Dispositif de dialyse du type à membrane à fibres creuses obtenu en utilisant une membrane à fibres creuses selon l'une quelconque des revendications 6 à 9.
